Europäisches Patentamt

European Patent Office

Office européen des brevets

(11) Publication number: **0 271 940**
**A2**

## EUROPEAN PATENT APPLICATION

(21) Application number: 87202253.8

(22) Date of filing: 18.11.87

(51) Int. Cl.4: **H04N 3/15 , H04N 9/04**

(30) Priority: **20.11.86 NL 8602949**

(43) Date of publication of application:
**22.06.88 Bulletin 88/25**

(84) Designated Contracting States:
**DE FR GB IT NL SE**

(71) Applicant: **N.V. Philips' Gloeilampenfabrieken**
**Groenewoudseweg 1**
**NL-5621 BA Eindhoven(NL)**

(72) Inventor: **Collet, Marnix Guillaume**
**c/o INT. OCTROOIBUREAU B.V. Prof.**
**Holstlaan 6**
**NL-5656 AA Eindhoven(NL)**

(74) Representative: **Steenken, Jacob Eduard et al**
**INTERNATIONAAL OCTROOIBUREAU B.V.**
**Prof. Holstlaan 6**
**NL-5656 AA Eindhoven(NL)**

(54) **Picture pick-up device for simultaneously generating interlaced, complementary picture pick-up signals at separate device outputs.**

(57) The signals are generated by a charge-coupled solid-state image sensor (CTE) having a picture pick-up member (PD) with picture pick-up elements (P) which are sensitive to picture information and which are arranged in rows and columns in a raster and with a parallel-in, series-out shift register member (SRD) for obtaining, after a picture information integration period the line and field-sequentially built-up picture pick-up signals (PS$_1$, PS$_2$) at the device outputs (CT$_1$, CT$_2$) after a parallel information transfer from the pick-up member (PD) and a series-sequential shift in the shift register member (SRD). If one shift register (SR) is effectively operative for at least two rows (R) of picture pick-up elements (P), the shift register output (ST) is coupled via a switching circuit (SC1) to the device outputs ($\overline{CT}_1$, CT$_2$), whilst the switching frequency is equal to half the register element shift frequency (1/2FP). In the case of equal numbers of device outputs (CT$_1$, CT$_2$) and shift registers (SR1, SR2) these are coupled together and the information is distributed row-wise in a punctuated manner over the shift registers (SR1, SR2) after the parallel information transfer. The result is an interlaced and punctuated pick-up signal generation. For a colour picture recording a colour mosaic filter may be arranged in front of the picture pick-up member (PD).

FIG.1a

FIG.1b

$TL = TLT + TLS$
$FP = \frac{1}{TP}$

FIG.1

## Picture pick-up device for simultaneously generating interlaced, complementary picture pick-up signals at separate device outputs.

The invention relates to a picture pick-up device for simultaneously generating interlaced, complementary picture pick-up signals at separate device outputs, said picture pick-up device comprising a solid-state image sensor having a pick-up member with picture pick-up elements which are sensitive to picture information and which are arranged in rows and columns in a raster and a read member for obtaining, after a picture information integration period, the line and field-sequentially built-up picture pick-up signals at the device outputs, which signals correspond to the picture information components picked up by the picture pick-up elements during the integration period.

Such a picture pick-up device in which interlaced picture pick-up signals are simultaneously generated provides the advantage that the signals are generated and processed more rapidly as compared with the conventional method of generating single or multiple interlaced picture pick-up signals in two or more field periods. After the picture signals have been generated and processed simultaneously, the interlaced picture pick-up signals can be simultaneously stored on a tape or record and, when being reproduced by way of television, these signals can be supplied consecutively and are suitable to be applied to conventional television display devices using interlacing.

It is an object of the invention to realise a picture pick-up device with which the single or multiple interlaced picture pick-up signals are generated simultaneously while making a given choice of the construction of the solid-stage image sensor. To this end a picture pick-up device according to the invention is characterized in that -when using the solid-state image sensor as a charge-coupled image sensor whose read member comprises a shift register member including at least one parallel-in, series-out shift register having a parallel coupling with the pick-up member, a series-sequential shift of information to a register series output being present in the shift register member after a periodical parallel information transfer from the pick-up member to the shift register member and a shift of information in the pick-up member - the said periodical parallel information is transferred in a punctuated manner from at least two juxtaposed rows of picture pick-up elements from the pick-up member to the shift register member, the shift register series output being coupled to an input of a switching circuit if one shift register is effectively operative in the shift register member for at least two rows of picture pick-up elements, said switching circuit having a plurality of switching outputs coupled to the same plurality of picture pick-up device outputs, the switching frequency in the switching circuit being smaller than the shift frequency in the said shift register by a factor which is equal to the plurality of switching outputs; and each shift register series output being coupled to an associated picture pick-up device output and the information being distributed over the shift registers in the shift register member in a row-wise punctuated manner after the said periodical parallel information transfer if the plurality of shift registers which is effectively operative in the shift register member is equal to the number of picture pick-up device outputs.

The invention is based on the recognition that the envisaged object is achieved by processing the information in a punctuated manner from each time at least two juxtaposed rows of picture pick-up elements in the described image sensor embodiment. Consequently, in the case of single interlacing, information components of, for example picture pick-up elements, which are odd-numbered in a row, in odd-numbered rows of picture pick-up elements occur in an odd-numbered field, whilst the same applies to an even-numbered field with even-numbered picture pick-up elements and rows thereof. The result upon display of the picture pick-up signal in two field periods constituting one frame period is a single interlaced and punctuated picture. By using three instead of two rows of picture pick-up elements in the parallel information transfer, a two-fold interlaced and punctuated picture with three field periods per frame period is obtained upon display, and so forth for further multiple interlacing and punctuation.

An embodiment of a picture pick-up device according to the invention in which the information from the pick-up member is optimally utilized for generating the picture signals is characterized in that for single, two-fold, three-fold or n-fold interlacing and punctuation said parallel information is periodically transferred from three, five, seven of $(2n + 1)$ juxtaposed rows of picture pick-up elements, respectively, the information components of the picture pick-up elements of the central row being alternately combined in the shift register member in an each time different combination and in a periodical manner in a cycle of two, three, four or $(n + 1)$ picture pick-up element periods, respectively, with the information components of the corresponding picture pick-up elements in the superjacent and the subjacent row or rows, respectively.

In, for example, the case of single interlacing and punctuation the information from the picture pick-up elements which are odd-numbered in the rows reaches an odd-numbered field and the information from the even-numbered picture pick-up elements reaches an even-numbered field. In, for example three-fold interlacing and punctuation the picture information from the picture pick-up elements having the numbers 1, 5, 9, ..., 2, 6, 10, ..., 3, 7, 11,... and 4, 8, 12, ... in the rows reaches a first, a second, a third and a fourth field, respectively.

An embodiment of a picture pick-up device according to the invention which is suitable for a colour picture recording and in which the picture pick-up signals occur as luminance, chrominance and colour difference signals at associated picture pick-up device outputs and in which the picture pick-up member of the image sensor has a colour filter is characaterized in that the colour filter is in the form of a mosaic filter whose mosaic areas correspond to pick-up areas of the picture pick-up elements and which have periodically different colours in the row and column directions, the shift register member including at least two parallel-in, series-out shift registers having register series outputs which are coupled either via a signal delay device having a delay time which is equal to a line period of the picture pick-up signal or are coupled via a path bypassing this device to inputs of a matrix circuit for obtaining a luminance signal and chrominance signals and colour difference signals, respectively, at outputs thereof, said outputs being coupled to inputs of the said switching circuit.

Information components originating from juxtaposed rows of picture pick-up elements are then combined to form the output signals.

To have the undelayed or delayed signal available, if required when the signals are processed, a further embodiment is characterized in that at least one register series output is coupled to a matrix input both via the signal delay device and via a path bypassing this device through a switching circuit having two inputs and an output, the switching frequency being equal to half the line frequency.

In order to have a given colour information originating from a row of picture pick-up elements and another colour information originating from the juxtaposed row of picture pick-up elements available per two line periods when the signals are processed, a further embodiment is characterized in that in the presence of two switching circuits operating at half the line frequency and two delay devices at least the one register series output is coupled via a further switching circuit having an input and two switching outputs to the signal delay devices and via paths bypassing these devices to the said two switching circuits, the switching frequency being equal to half the line frequency.

For obtaining luminance signals for the first and second fields at two device outputs and for obtaining an associated colour difference signal with an alternation per line period at two corresponding device outputs in the case of single interlacing and puctuation, a further embodiment is characterized in that the matrix circuit has an output for the supply of a luminance signal, an output for the supply of a red colour difference signal and an output for the supply of a blue colour difference signal, each output being coupled to the input of an associated switching circuit operating at the shift frequency divided by the said factor, one of the switching circuits for the colour difference signals being operative each time during one line period alternately over two line periods, corresponding outputs of the two latter switching circuits being connectecd together.

For obtaining other primary colours an embodiment of the picture pick-up device in which a primary colour and additive colours occur in the mosaic filter is characterized in that the register series outputs of the two effectively operative parallel-in, series-out shift registers are coupled to inputs of a signal subtraction circuit an output of which is coupled to the signal delay device and via a path bypassing this device to the matrix circuit.

The invention will now be described in greater detail by way of example with reference to the accompanying drawings in which

Figure 1 shows two embodiments in Figures 1a and 1b of a picture pick-up device according to the invention using single interlacing and punctuation;

Figure 2 also shows two embodiments in Figures 2a and 2b with an optimum information processing in the case of single interlacing and punctuation;

Figure 3 shows two embodiments in Figures 3a and 3b which are comparable to the embodiments shown in Figures 1a and 1b but which use two-fold interlacing and punctuation;

Figure 4 shows an embodiment with an optimum information processing in the case of three-fold interlacing and punctuation and

Figure 5 shows an embodiment which is suitable for a colour picture recording and operates with an optimum information processing in the case of single interlacing and punctuation.

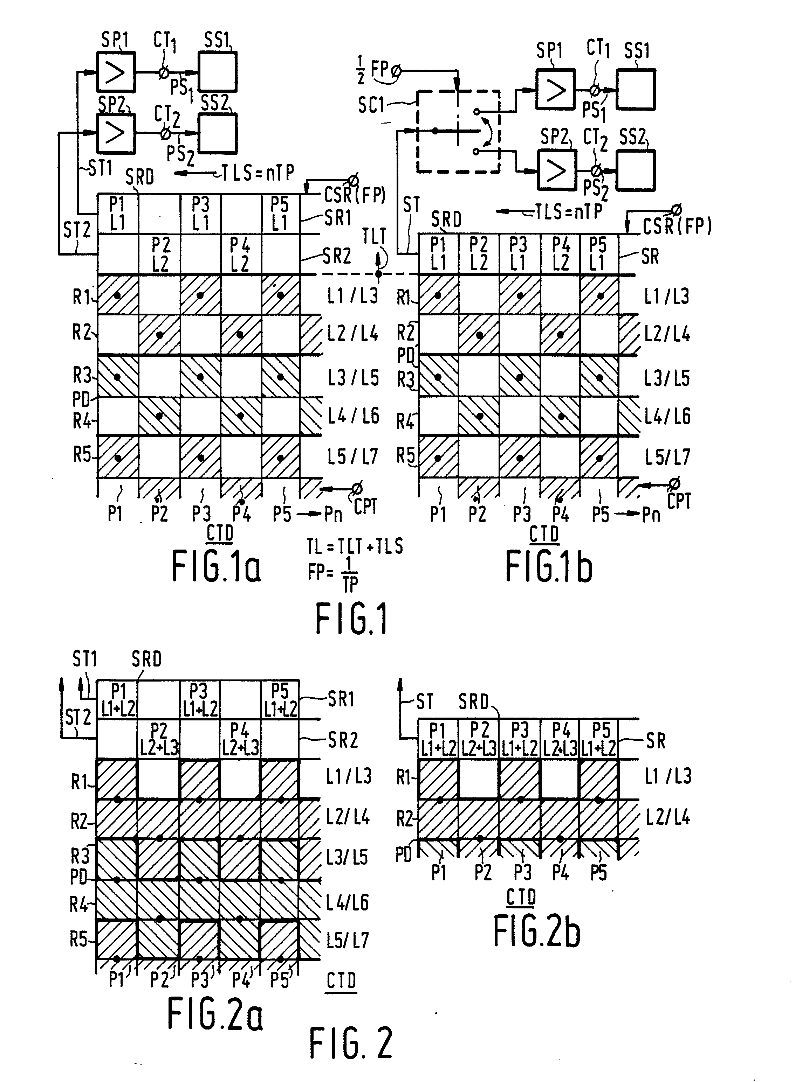

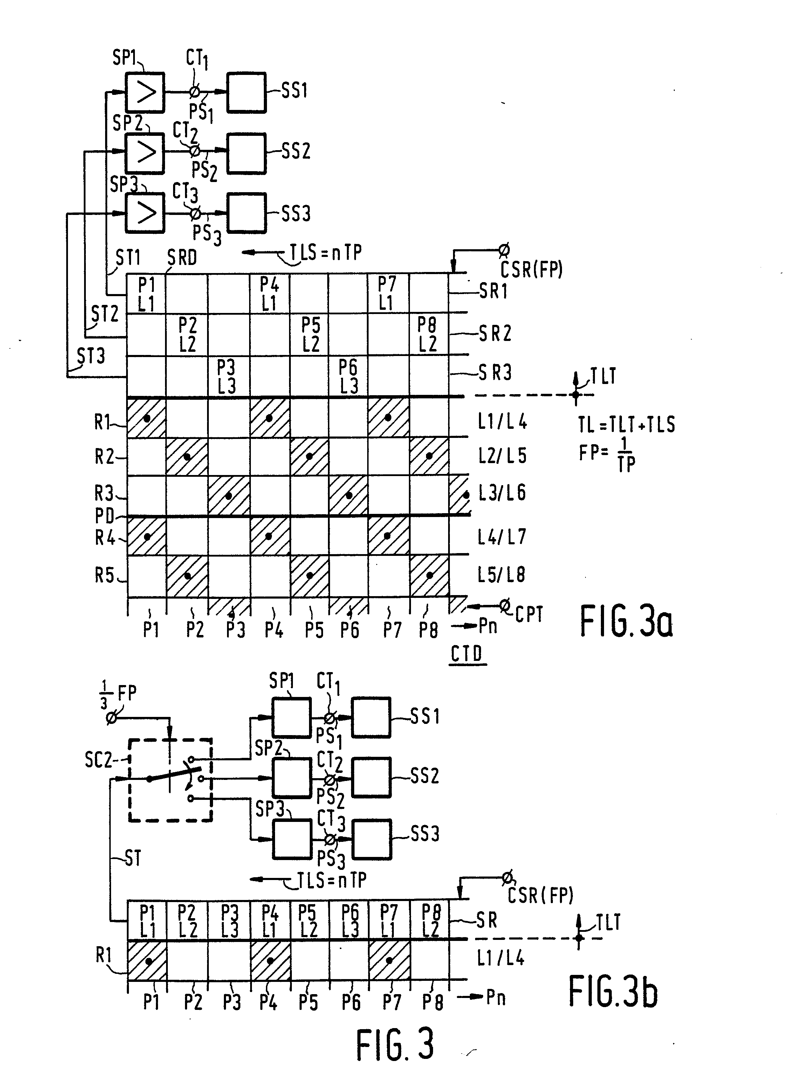

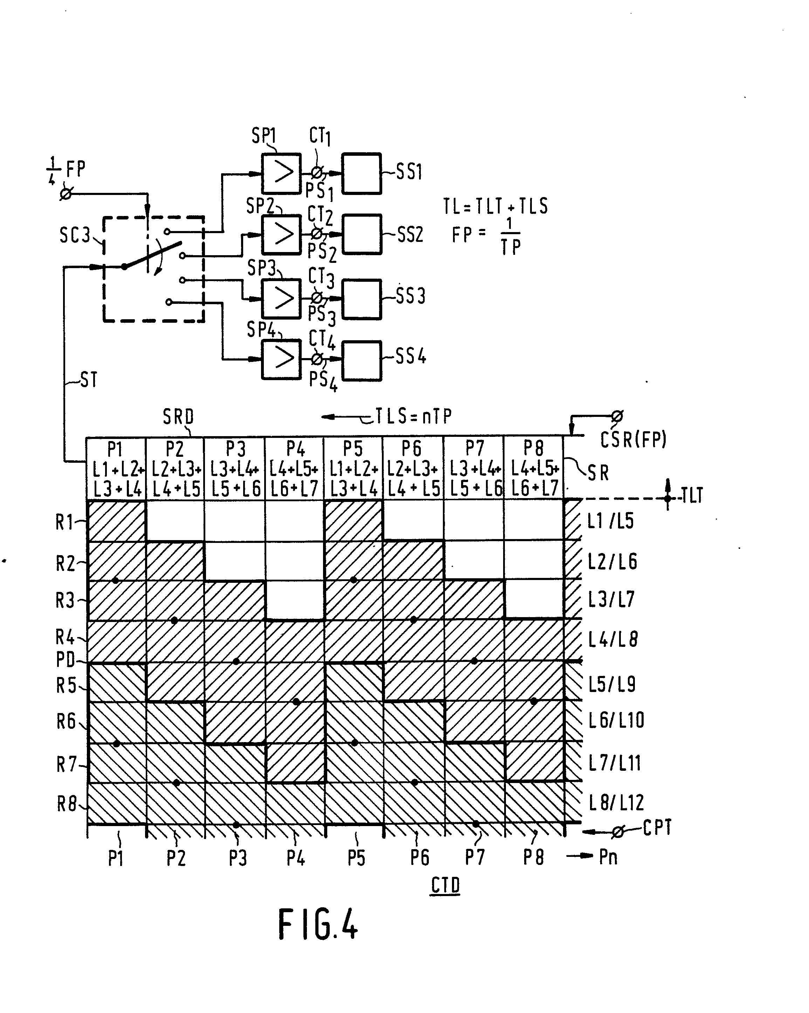

In Figures 1 to 5 corresponding components have the same or similar reference designations in the various embodiments of a picture pick-up device according to the invention. In Figure 1a the reference CTD denotes a charge-coupled image sensor having a picture pick-up member PD and a read-shift register member SRD. The picture Pick-up member PD is formed with picture pick-up elements P sensitive to picture information and arranged in rows R1, R2, R3, R4, R5, etc. and in columns P1, P2, P3, P4, P5 to Pn in a raster. The picture information may be sensitive to radiation, such as light originating from a scene to be recorded, to pressure exerted by an object or to another physical quantity. The column indication corresponds to the enumeration of the picture pick-up elements P in the rows R, to the odd-numbered picture pick-up elements P1, P3, P5 etc. and the even-numbered picture pick-up elements P2, P4, etc. The read-shift register member SRD of Figure 1a comprises two parallel-in, series-out shift registers SR1 and SR2 for which the register elements are not further indicated as such. The references ST1 and ST2 denote register series outputs of the registers SR1 and SR2, respectively. The outputs ST1 and ST2 are coupled via signal processing circuits SP1 and SP2 to device outputs $CT_1$ and $CT_2$, respectively, at which simultaneously generated, interlaced and punctuated complementary picture pick-up signals $PS_1$ and $PS_2$ occur in a manner to be described hereinafter. The signal processing circuits SP may comprise amplification circuits, correction circuits and other types of circuits in known manner. The signals $PS_1$ and $PS_2$ are applied to signal storage devices SS1 and SS2, respectively, each of which may be part of a signal storage device. The devices SS1 and SS2 are, for example in the form of a tape or a record for storage of the picture pick-up signals $PS_1$ and $PS_2$. Signal storage may be effected either or not after modulation in separate signal tracks or combined in one signal track. Semiconductor memories may also be used. Both analog and digital signal storage is possible, dependent on the specific memory construction with semiconductor devices, tape or record. After the signal storage the signals $PS_1$ and $PS_2$ can be supplied consecutively in the case of a signal supply by way of television and they may thus be suitable to be applied to conventional television display devices using interlacing. The indices (1 and 2 in Figure 1) at CT and PS denote the interlacing method and a single interlace picture is associated with a first field 1 and a second field 2 which together constitute a frame. the indices 1, 2 and 3 in Figure 3 are associated with two-fold interlacing and the indices 1, 2, 3 and 4 in Figure 4 are associated with three-fold interlacing. Multiple interlacing can be used in high-definition television or when recording photographic or cinematographic images of television display screens in which a higher interlacing is often accompanied by an improved picture quality of the photograph and the film.

To explain the operation of the image sensor CTD, it is described in a given embodiment, for example for recording light originating from a scene. For such an image sensor reference is made to an English-language technical publication no. 150 of the Philips Electronic Components and Materials Division, issued on 11 January 1985 in which the image sensor is in the form of a so-called frame transfer sensor which is mentioned as an attractive alternative to a television camera tube. The shift register member which is shielded from light comprises three parallel shift registers which are coupled to the pick-up member via a storage member which is shielded from light. If the latter light shield is not present, the further surface of the image sensor is utilized for picture information recording beyond the shift register member and possible strip-shaped shields for obtaining black information. the image sensor thus described in which the pick-up member directly adjoins the shift register member and in which only two of the three shift registers present are used for reading can be used as an image sensor CTD in accordance with Figure 1a. In a similar embodiment only one of the three shift registers present is used in the image sensor CTD in accordance with Figure 1b.

Starting from the described embodiment of the image sensor CTD it follows for the description of its operation that after a picture information integration period at the picture pick-up elements P and during an interruption of the information supply, for example by an optical shutter, parallel information is periodically transferred from the pick-up member PD to the shift register member SRD, whilst information is shifted in the pick-up member PD. Subsequently information is series-sequentially shifted to the register series outputs ST1 and ST2 in the shift register member SRD. Figure 1 shows that the information shift in the pick-up member PD and the parallel information transfer to the shift register member SRD are effected under the control of a clock pulse signal CPT. The subsequent series shift in the shift register member SRD is effected under the control of a clock pulse signal CSR(FP). The reference FP denotes the register shift frequency. The register element shift period TP follows from the relation $FP = \frac{1}{TP}$ . Here it holds that a register shift period TLS = n TP. Furthermore the parallel information transfer period is denoted by TLT and in accordance with Figure 1 it holds that TL = TLT + TLS. Here the reference TL is the line period at the line and field-sequentially built-up picture pick-up signals $PS_1$ and $PS_2$.

The image sensor CTD of Figure 1a is shown with information components as may be present at a given instant. At a previous instant line information components L1 to L5 were present in the rows R1 to R5, respectively, of picture pick-up elements P. The situation shown occurs after a single shift and parallel transfer. The line information components L3 to L7 are present in the rows R1 to R5. The information component originating from the fourth picture pick-up element P1 of the first row R1 generating the first line information component L1 in the information integration period is present in the first register element of the register SR1. In Figure 1a this is indicated by the superposed references P1 and L1. The further odd register elements of the register SR1 are also filled with the information components P3 and L1, P5 and L1, etc. In the shift register SR2 the register elements to be even numbered are filled with the information components P1 and L1, P4 and L2, etc. associated with the second line information component L2 generated in the row R2. After the situation shown the series shift will be effected in the shift registers SR1 and SR2.

The picture pick-up elements P which contribute to the picture pick-up signals PS1 and PS2 are shaded in the rows R1 to R5 of the image sensor CTD of Figure 1a and Figure 1b. The dots in the shaded areas indicate the centres. From this distribution of centres it is apparent that the periodical parallel information transfer is effected in a punctuated manner from each time two juxtaposed rows (R1, R2), (R3, R4), etc. of picture pick-up elements P which are shown in solid lines. According to Figure 1a the information is subsequently distributed in a puctuated manner over the shift registers SR1 and SR2 in the shift register member SRD. The result is that two single interlaced and punctuated picture pick-up signals PS1 ans PS2 associated with the first and the second field, respectively, are obtained. The first field originates from information components of picture pick-up elements P1, P3, P5, etc. which are odd-numbered in a row in odd-numbered rows with the line information components L1, L3, L5, etc. Likewise the second field has the information components from the even picture pick-up elements P2, P4, P6 etc. in the even rows with the line information components L2, L4, L6, etc.

According to Figure 1b the shift register member SRD is used with only one shift register SR. The information components already described with reference to Figure 1a are present in a punctuated manner in the only effectively operating shift register SR and these information components will become consecutively available during the series shift at one register series output ST. To obtain the picture pick-up signals PS1 and PS2 the output ST is coupled to an input of a switching circuit SC1 having two switching outputs which are coupled to the respective device outputs CT1 and CT2. The circuit SC1 has a switching input to which a signal at a switching frequency of 1/2 FP is applied, as is shown at a supply terminal. The result is that during an element period TP the one switching output is coupled to the input of the switching circuit SC1 and during the next element period TP the other switching output is coupled to said input. This switching with two picture element periods is denoted by the double-headed curved arrow in the switching circuit SC1 and in further switching circuits. The single interlaced and punctuated picture pick-up signals PS1 and PS2 described with reference to Figure 1a are obtained by the split-up in the switching circuit SC1 at the switching frequency of 1/2 FP, the two switching outputs and the shift frequency of FP at the shift register SR. Instead of using two circuits SP1 and SP2 after the switching circuit SC1, one signal processing circuit SP may be arranged before it.

Figure 2 illustrates in a simplified manner how a picture signal is generated with an optimum use of the picture pick-up member PD. The image sensor CTD of Figure 2a and Figure 2b corresponds to that of Figure 1 and Figure 1b, respectively, with the same state of information processing. The periodical parallel information transfer is effected from three rows R instead of from two rows R of picture pick-up elements P. The picture information of the picture pick-up elements P1, P3, P5, etc. is combined from the central row R2 with that of the superjacent row R1 and the picture information of the picture pick-up elements P2, P4, etc. is combined with that of the subjacent row R3. From the line information components L1, L2 and L3 generated in the rows R1, R2 and R3 the combinations are formed in the shift register member SRD as is indicated in Figures 2a and 2b, respectively. For the sake of completeness it is to be noted that the information components generated in the picture pick-up elements P2, P4, etc. of the first row R1 are not utilized for obtaining the picture signal (shown unshaded). As in Figure 1, the centres of the combinations of the picture pick-up elements P are indicated by dots in Figure 1. Also in this case the single interlacing and punctuation is found to be present. The shift register member SRD illustrates that the picture information components from the odd picture pick-up elements P1, P3, P5, etc. reach the first field and that those from the even picture pick-up elements P2, P4, etc. reach the second field. In the parallel information transfer in Figure 2b the information components in picture pick-up elements P1, P3, P5, etc. undergo two steps from the rows R1 and R2 and those in the elements P2, P4, etc. undergo three steps from the rows R2 and R3. The combinations are formed in a periodical manner with a period of two picture pick-up element periods TP.

Figure 3 shows in Figures 3a and 3b picture pick-up devices operating with two-fold interlacing and punctuation in a manner comparable to that shown in Figures 1a and 1b. The same state with respect to time is shown. Figure 3a shows three shift registers SR1, SR2 and SR3 with three outputs ST which are coupled via three signal processing circuits SP to three device outputs CT. The two-fold interlacing and punctuation appears from the centres of the shaded areas shown. Instead of the sequence shown in the frame constituting three fields with P1, P4, P7 etc. in the first field, P2, P5, P8 etc. in de second field and P3, P6 etc. in the third field, another sequence may be used in which, for example the second field is constituted by P3, P6, etc. and the first field is constituted by P2, P5, P8, etc.

Figure 3b shows a switching circuit SC2 having three switching outputs and the switching frequency 1/3 FP, as it must generally hold that the number of switching outputs should be equal to the number of device ouputs CT and the switching frequency should be smaller than the shift frequency FP at the shift register SR by a factor which is equal to this number.

Instead of continuing from Figure 3 with the two-fold interlacing and punctuation to a subsequent Figure, which illustrates the optimum picture information processing likewise as in Figure 2 which is associated with Figure 1, Figure 4 shows an optimum picture information processing using three-fold interlacing and punctuation. Figure 4 corresponds to Figure 2b for the single interlacing and punctuation. In the described state the information combinations are indicated in the shift register SR. The three-fold interlaced and punctuated picture pick-up signals PS1, PS2, PS3, PS4 become available via a switching circuit SC3 having four switching outputs and the switching frequency of 1/4 FP. The parallel information transfer takes place from seven rows R of picture pick-up elements P, each time with a different combination of four rows R over a period of four element periods TP. The picture pick-up elements P1, P5, etc. undergo four steps per periodical parallel information transfer, the elements P2, P6, etc. undergo five steps, the elements P3, P7 etc. undergo six steps and the elements P4, P8, etc. undergo seven steps. The associated centres of the combinations of picture pick-up elements P are indicated. Instead of the sequence shown, other column sequences, may be chosen analogous to the description of Figure 3a. As an example, the second field is not associated with the sequence of picture pick-up elements shown, starting with the second picture pick-up element P2, but with that starting with the picture pick-up element P3 and the alternation for the third field.

It can be deduced from the foregoing that (2n + 1) juxtaposed rows R must be used for a desired n-fold interlacing and punctuation with a periodical signal combination over (n + 1) picture pick-up element periods TP.

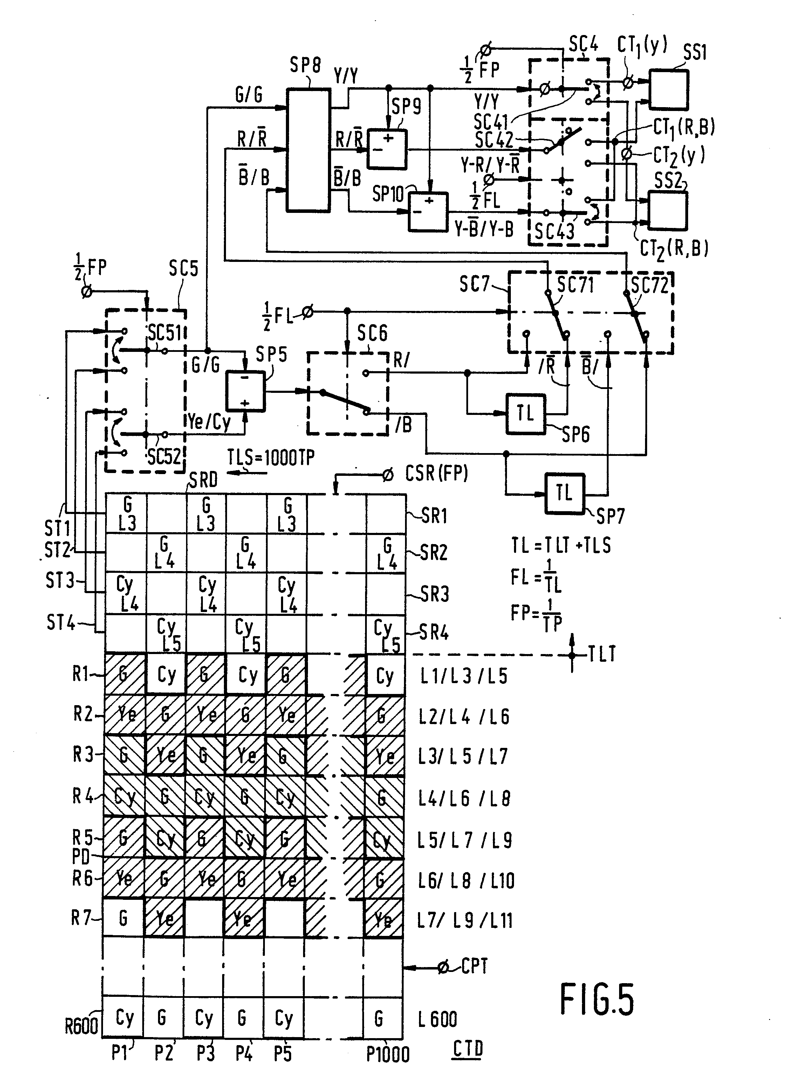

Figure 5 shows an embodiment of the picture pick-up device suitable for a colour picture recording. The references CT1 (Y) and CT2 (Y) denote picture pick-up device outputs at which luminance signals Y occur, associated with the first and the second field, respectively which is jointly interlaced and punctuated. These luminance signals Y correspond to the described picture pick-up signals PS1 and PS2. Correspondingly the references CT1 - (R,B) and CT2 (R,B) denote outputs at which colour difference signals Y-R or Y-B occur, associated with the first and the second field, respectively. The colour difference signal Y-R and Y-B are alternately present per line period TL in each field. The colour difference signals Y-R or Y-B which are then present and distributed correspond to the described picture pick-up signals PS1 and PS2. A red chrominance signal is denoted by R and a blue chrominance signal is denoted by B whilst a green chrominance signal to be denoted by G as a third primary colour is present and, for example the relation holds that: $Y = 0.59G + 0.30R + 0.11B$. The outputs CT1 (Y) and CT1 (R,B) with the luminance signal Y and the colour difference signal Y-R or Y-B for the first field, alternately per first and second line period TL, are coupled to inputs of the signal storage device SS1. Likewise, the outputs CT2 (Y) and CT2 (R,B) for the second field are coupled to the signal storage device SS2. The outputs CT1 (Y), CT1 (R,B), CT2 (Y) and CT2 (R,B) are coupled to outputs of a switching circuit SC4 formed from three sub-circuits SC41, SC42 and SC43. Each of these sub-circuits is comparable to the switching circuit SC1 of Figure 1b in which, however, an unconnected extra contact is shown at the sub-circuits SC42 and SC43. The unconnected contact at the sub-circuit SC42 is connected to the circuit input, which means that no signal is supplied instantaneously via this sub-circuit. The sub-circuits SC41 and SC43 are operative in the same way as described with reference to the switching circuit SC1 of Figure 1b. It has been indicated at three inputs of the switching circuit SC4 that signals Y/Y, Y-R/Y-$\overline{\text{R}}$ and Y-$\overline{\text{B}}$/Y-B, respectively are applied thereto. These signals are associated with two successive first and second line periods TL with the line information components being separated by the dash. Colour information components R and B delayed over one line period TL are indicated by $\overline{\text{R}}$ and $\overline{\text{B}}$. It appears that when the signals Y-R and Y-B occur, the signals Y-$\overline{\text{B}}$ and Y-$\overline{\text{R}}$, respectively are present at the same time. These delayed colour difference signals are not used for signal storage. The state of the switching circuit SC4 shown in Figure 5 is associated with the processing of the signals Y and Y-B which are passed on in an interlaced and punctuated manner to the separate inputs of the signal storage devices SS1 and SS2 for the first and second fields, respectively. Because of the supply of a switching signal at the switching frequency 1/2 FL to an input at the sub-circuits SC42 and SC43, the alternating signal processing over the two line periods TL is obtained.

To obtain the signals Y and Y-R in the one line period TL and the signals Y and Y-B in the next line period TL, the image sensor CTD of Figure 5 is formed with a colour filter (G, Ye, Cy) in a mosaic form at the picture pick-up member PD. The mosaic areas G pass green light to the corresponding subjacent pick-up areas of the picture pick-up elements P. Mosaic areas Ye pass yellow coloured light (G + R) and the mosaic areas Cy pass cyan coloured light (G + B). An example shows that there are 600 rows of 1000 picture pick-up elements P. Starting with the parallel information transfer of the line information components L1 to L600 from the rows R1 to R600, Figure 5 shows the state in which the line information components L5, L6, L7, etc. occur in the rows R1, R2, R3, etc. Distributed over four shift registers SR1, SR2, SR3 and SR4, the shift register member SRD contains the information components indicated in Figure 5 and described with reference to Figure 1a. Outputs ST1, ST2, ST3 and ST4 of the shift registers SR will pass on the indicated information components in an interlaced and punctuated manner to a switching circuit SC5 in a subsequent register shift period TLS = 1000 TP. The switching circuit SC5 has two sub-circuits SC51 and SC52 each with two inputs and an output and operating with a switching signal of the switching frequency 1/2FP. The inputs of the sub-circuit SC52 are connected to the outputs ST1 and ST2 so that the information components originating from the shift registers SR1 and SR2 are combined to one signal G(L3,L4). Likewise, starting from the situation shown, the output of the sub-circuit SC52, which is coupled to the outputs ST3 and ST4, will supply one signal Cy-(L4,L5). In the previous line period TL the shift registers SR1 and SR2 have jointly supplied a signal G(L1,L2) from the output of the sub-circuit SC51, and the sub-circuit SC52 supplied a signal Ye(L2,L3). The alternation per line period TL is indicated by G/G and Ye/Cy at the outputs of the switching circuits SC5.

It appears that signals such as might come from two completely filled shift registers SR in the shift register member SRD of Figure 5 occur at the two outputs of the switching circuit SC5, which is comparable to the single shift register SR in the shift register member SRD of Figure 1b. The image sensor CTD and the switching circuit SC5 of Figure 5 are jointly operative as an image sensor which effectively operates with two shift registers. The shift registers SR1 and SR2 effectively operate, jointly with the circuit SC51, as one parallel-in, series-out shift register. The same applies to a shift register (SR3, SR4, SC52). The embodiment shown in Figure 5 with four shift registers SR is given for the same two reasons as those which apply to the embodiment described in the said publication using three shift registers SR. More specifically, a higher horizontal picture pick-up element density is possible than when using a single shift register and when using colour filters it is possible to perform a selective separation of charge packets associated with different colours in the shift register member. In those cases in which the shift register member has several shift registers, it appears in practice that reading all shift registers in connection with the output signal quality is preferred to reading a single shift register. In that case there is less noise and interference.

The signals G/G and Ye/Cy occurring over two line periods TL at the outputs of the circuit SC5 are applied to a (-) input and a ( + ) input, respectively, of a single substraction circuit SP5. Consequently, a chrominance signal Ye-G = R occurs as a red chrominance signal at an output during the first line periods TL and a chrominance signal CY-G = B occurs as a blue chrominance signal at an output during the second line periods TL. An input of a switching circuit SC6 having two outputs and switching input for the supply of a switching signal of half the line frequency (1/2FL) succeeds the output of the circuit SP5. It is assumed that during the first line periods TL the output of the circuit SP5 conveying the chrominance signal R is connected to the output at which R/ is shown. The other input conveys the chrominance signal B during the second line periods TL, which is denoted by /B. Starting from the state shown at the image sensor CTD the output conveying the signal /B is interconnected prior to processing the information present in the shift register member SRD.

The output conveying the chrominance signal R/ is connected via a signal delay device SP6 and via a path bypassing this device to respective inputs of a switching circuit SC7, more specifically in this circuit to two inputs of a sub-circuit SC71. The device SP6 has a delay period, in the manner indicated by TL, which is equal to one line period TL. During the supply of the chrominance signal R/ to the one input of the sub-circuit SC71 a signal / $\overline{R}$ delayed over one line period TL is supplied to the other input. Delayed signals are also indicated by the horizontal dash over the reference symbol. Likewise the output conveying the chrominance signal /B is coupled to inputs of a further sub-circuit SC72 via a delay device SP7, so that simultaneously the signal /B and a signal $\overline{B}$ / delayed over one line period TL are present at the sub-circuit SC72. The circuit SC7 receives the switching signal of half the line frequency (1/2FL) at a switching input, whilst the respective signals R/ and $\overline{B}$ occur at two outputs of the circuit SC7 during the first line periods TL and the respective signals $/\overline{R}$ and $/B$ occur at these outputs during the second line periods.

The outputs of the circuit SC5 conveying the signal G/G during the two line periods TL is connected to an input of a matrix circuit SP8. Simultaneously signals R/$\overline{R}$ and $\overline{B}$/B are applied from the circuit SC7 to two further inputs of the circuit SP8. The matrix circuit SP8 forms in known manner and in accordance with the given formula a luminance signal Y/Y which is formed by combination of the signals G, R and $\overline{B}$ during the first line periods TL and by combination of the signals G, $\overline{R}$ and B during the second line periods TL. It appears therefrom that undelayed and delayed signals must be available for signal processing, more specifically for both chrominance signals. Outputs of the matrix circuits SP8 simultaneously convey the signals Y/Y, R/$\overline{R}$ and $\overline{B}$/B indicated at this circuit. The output conveying the signal Y/Y is connected at a (+) input of a signal subtraction circuit SP9 and SP10, respectively. A (-) input of the signal subtraction circuits SP9 and SP10 receives the signals R/$\overline{R}$ and $\overline{B}$/B, respectively. Consequently, the circuits SP9 and SP10 supply the said red colour difference signal Y-R/Y-$\overline{R}$ and the blue colour difference signal Y-$\overline{B}$/Y-B, respectively to the switching circuit S4. The circuits SP8, SP9 and SP10 combined constitute a matrix circuit (SP8, SP9, SP10) for supplying the luminance signal Y/Y and the colour difference signals Y-R/ and Y-B for further processing via the circuit SC4.

Figure 5 shows a specifically formed colour mosaic filter (G, Ye, Cy). An optimum signal processing is present, as described with reference to Figure 2. Adapted to the combination of the image sensor CTD and the circuit SC5 supplying the signals G/G and Ye/Cy per two line periods TL, the circuits SP5 to SP10 and the circuits SC6 and SC7 are present in the described construction of the picture pick-up device. Due to the choice of the green primary colour (G) and the additive colours yellow (Ye) and cyan (Cy), the subtraction circuit SP5 is provided in order to obtain the other primary colours blue (B) and red (R). Other choices of colour mosaic filter constructions will be accompanied by adapted signal processing operations.

## Claims

1. A picture pick-up device for simultaneously generating interlaced, complementary picture pick-up signals at separate device outputs, said picture pick-up device comprising a solid-state image sensor having a pick-up member with picture pick-up elements which are sensitive to picture information and which are arranged in rows and columns in a raster, and a read member for obtaining, after a picture information integration period, the line and field-sequentially built-up picture pick-up signals at the device outputs, which signals correspond to the picture information components picked up by the picture pick-up elements during the integration period, characterized in that - when using the solid-state image sensor as a charge-coupled image sensor whose read member comprises a shift register member including at least one parallel-in, series-out shift register having a parallel coupling with the pick-up member, a series-sequential shift of information to a register series output being present in the shift register member after a periodical parallel information transfer from the pick-up member to the shift register member and a shift of information in the pick-up member - the said periodical parallel information is transferred in a punctuated manner from at least two juxtaposed rows of picture pick-up elements from the pick-up member to the shift register member, the shift register series output being coupled to an input of a switching circuit if one shift register is effectively operative in the shift register member for at least two rows of picture pick-up elements, said switching circuit having a plurality of switching outputs coupled to the same plurality of picture pick-up device outputs, the switching frequency in the switching circuit being smaller than the shift frequency of the said shift register by a factor which is equal to the plurality of switching outputs; and each shift register series output being coupled to an associated picture pick-up device output and the information being distributed over the shift registers in the shift register member in a row-wise, punctuated manner after the said periodical parallel information transfer if the plurality of shift registers which is effectively operative in the shift register member is equal to the number of picture pick-up device outputs.

2. A picture pick-up device as claimed in Claim 1, characterized in that for single, two-fold three-fold or n-fold interlacing and punctuation said parallel information is periodically transferred from three, five, seven or (2n + 1) juxtaposed rows of picture pick-up elements, respectively, the information components of the picture pick-up elements of the central row being alternately combined in the shift register member in an each time different combination and in a periodical manner in a cycle of two, three, four or (n + 1) picture pick-up element periods, respectively, with the information components of the corresponding picture pick-up elements in the superjacent and the subjacent row or rows, respectively.

3. A picture pick-up device as claimed in Claim 1 or 2, in which the picture pick-up signals occur as luminance, chrominance and colour difference signals at associated picture pick-up device outputs and in which the picture pick-up member of the image sensor has a colour filter, characterized in that the colour filter is in the form of a mosaic filter whose mosaic areas correspond to pick-up areas of the picture pick-up elements and which have periodically different colours in the row and column directions, the shift register member including at least two parallel-in, series-out shift registers having register series outputs which are coupled either via a signal delay device having a delay time which is equal to a line period of the picture pick-up signal or are coupled via a path bypassing this device to inputs of a matrix circuit for obtaining a luminance signal and chrominance signals and colour difference signals, respectively at outputs thereof, said outputs being coupled to inputs of the said switching circuit.

4. A picture pick-up device as claimed in Claim 3, characterized in that at least one register series output is coupled to a matrix input both via the signal delay device and via a path bypassing this device through a switching circuit having two inputs and an output, the switching frequency being equal to half the line frequency.

5. A picture pick-up device as claimed in Claim 4, characterized in that in the presence of two switching circuits operating at half the line frequency and two delay devices at least the one register series output is coupled via a further switching circuit having an input and two switching outputs to the signal delay devices and via paths bypassing these devices to the said two switching circuits the switching frequency being equal to half the line frequency.

6. A picture pick-up device as claimed in Claim 5, characterized in that the matrix circuit has an output for the supply of a luminance signal, an output for the supply of a red colour difference signal and an output for the supply of a blue colour difference signal, each output being coupled to the input of an associated switching circuit operating at the shift frequency divided by the said factor, one of the switching circuits for the colour difference signals being operative each time during one line period alternately over two line periods, corresponding outputs of the two latter switching circuits being connected together.

7. A picture pick-up device as claimed in Claim 3, 4, 5, or 6, characterized in that the register series outputs of the two effectively operative parallel-in, series-out shift registers are coupled to inputs of a signal subtraction circuit an output of which is coupled to the signal delay device and via a path bypassing this device to the matrix circuit.

FIG.1a

FIG.1b

$$TL = TLT + TLS$$
$$FP = \frac{1}{TP}$$

FIG.1

FIG.2a

FIG.2b

FIG. 2

$TLS = nTP$

$CSR(FP)$

$TL = TLT + TLS$

$FP = \dfrac{1}{TP}$

FIG.3a

FIG.3b

FIG.3

FIG.4

FIG.5

$$TL = TLT + TLS$$
$$FL = \frac{1}{TL}$$
$$FP = \frac{1}{TP}$$

TLS = 1000 TP